# EUROPEAN PATENT SPECIFICATION

(11) **EP 0 727 439 B1**
(45) Date of publication and mention of the grant of the patent: **19.02.2003**
(21) Application number: 95301054.3
(22) Date of filing: 20.02.1995
(51) Int. Cl.: C08B 1/00, D01F 2/02, C08J 3/12

(54) **Pelletized pre-dope granules of cellulose and tertiary amine oxide, process for making them and process for making shaped articles thereof**
Pelletierte Granulate aus Zellulose und tertiären Aminoxyden; Verfahren zu deren Herstellung und Verfahren zur Herstellung von Formkörpern daraus
Granules de cellulose et d'oxyde d'amine tertiaire; procédé pour leur préparation et procédé pour la fabrication d'articles à partir de ces granules

(43) Date of publication of application: 21.08.1996
(73) Proprietor: KOREA INSTITUTE OF SCIENCE AND TECHNOLOGY, Seoul (KR)
(72) Inventor: Lee, Wha Seop, Kyongnam Apt. 1-402, 60, Seoul (KR); Jo, Seong Mu, 168-288 (2/5), Seoul 136-020 (KR); Kang, Ho Jong, Apkujeong-dong, Kangnam-ku, Seoul (KR); Kim, Dong Bok, c/o Korea Inst. of Science & Techno, Seongbuk-ku, Seoul 136-791 (KR); Park, Chong Soo,, Dongdaemoon-ku, Seoul 130-050 (KR)
(74) Representative: Carter, Caroline Ann

(56) References cited:
- WO-A-94/28217
- CH-A- 191 822
- GB-A- 2 001 320
- GB-A- 2 001 321
- DATABASE WPI Week 9215 Derwent Publications Ltd., London, GB; AN 121407 & SU-A-1 645 308 (GOLOVA L K) , 30 April 1991
- FIBRE CHEMISTRY, vol. 23, no. 2, 1 April 1991 NEW YORK US, pages 80-85, XP 000271011 V.V.ROMANOV ET AL. 'State and Prospects of Development in the Manufacture of Hydrocellulose Fibres based on New Technologies'

## Description

The present invention relates to pelletized pre-dope granules of cellulose and a tertiary amine oxide wherein the tertiary amine oxide is homogeneously dispersed in the cellulose to penetrate therethrough, and a process for making them. Also, the present invention relates to a process for making shaped articles, such as fibers and films, by extruding a dope solution prepared from cellulose and tertiary amine oxide by heating pelletized pre-dope granules at a temperature sufficient to melt the tertiary amine oxide and dissolve the cellulose.

A process for making cellulosic fibers using a tertiary amine oxide has significant advantages over conventional processes which has a viscose solution because the tertiary amine oxide is a less toxic solvent than the viscose solution. The process using a tertiary amine oxide can provide a clean environment for workers and substantially reduce the amount of waste water and atmospheric pollution which may occur in the course of producing fibers. Further, the viscose process is very complicated and involves high energy consumption, whereas the tertiary amine oxide is completely recovered. Thus, the latter process is more economical than the former one in view of the production cost. Moreover, the fibers obtained by the latter process are superior to those obtained from viscose rayon in view of their physical properties such as tensile strength. Thus, the latter fibers can be used as synthetic fibers with various advantages.

A process for making shaped cellulosic fibers from the cellulose solution in a tertiary amine oxide solvent was first proposed by Graenacher *et al.* in U.S. Patent No. 2,179,181 issued in 1939. In accordance with the proposed process, from 7 to 10% by weight of cellulose is dissolved in the tertiary amine oxide solvent.

Since then, a number of methods have been proposed to develop a more effective and economical process for making cellulosic fibers. Most of them were focused on the production of a solution with a high solid content and the elimination of the problems of low workability due mainly to the high concentration of the solution. For example, a process using an N-methylmorpholine-N-oxide solvent is proposed in U.S. Patent No. 3,447,939 to Johnson, a process using a dimethyl sulfoxide, N-methylpyrrolidone, or sulfolane diluent for the solution is proposed in U.S. Patent No. 3,508,941 to Johnson, and processes using amines as a co-solvent are proposed in U.S. Patent Nos. 4,290,815 to Henry and 4,324,539 to Vargar.

Processes for producing a solution having a high solid content of cellulose in an amine oxide containing an appropriate amount of water are disclosed in U.S. Patent Nos. 4,142,913 to McCorsley *et al*.; 4,144,080 to McCorsley; 4,196,282 to Franks *et al*.; and 4,246,221 to McCorsley. However, since the solution according to the above patents has too high viscosity to be wet-spun, these patents employ an air-gap spinning technique to increase the production yields.

In accordance with the processes disclosed in these patents, cellulose is added to a solution of a tertiary amine oxide containing a 50% or more excess of water to form a slurry by swelling, and then the excess water contained in the slurry is distilled off under reduced pressure to form a cellulose solution for spinning. The resulting solution is supplied to an extruder equipped with a spinnerette. However, these processes necessarily require a long time for the distillation under reduced pressure. This causes thermal decomposition of cellulose and consequently discoloration of the spinning solution with reduction of molecular weight. Moreover, the resulting solution has the disadvantage of causing deterioration of some of the physical properties after spinning.

U.S. Patent Nos. 4,142,913 to McCorsley *et al*., and 4,144,080 to McCorsley disclose an azeotropic distillation process in which a non-solvent such as, for example, alcohols, dimethylformamide, dimethylsulfoxide, toluene, orxylene is added in order to more easily remove the excess of water. However, since a large amount of the non-solvent materials contained in the removed water must be recovered for reuse, these processes have a drawback that an additional, complicated step is required to separate the non-solvent materials from water. In addition, in the course of concentrating the cellulose solution, the concentration temperature and time will be raised and extended with the increment of the cellulose concentration, and more energy will be required to stir the slurry which will have higher viscosity. Thus, it is difficult to carry out a continuous process, which results in low productivity.

U.S. Patent No. 4,211,574 to McCorsley *et al*. discloses a process for making a cellulose solution wherein a pulp sheet of cellulose is soaked in a liquid tertiary amine oxide having a water content of 5 to 15% cellulose at 89 to 95 °C to be swollen, and then the mixture is stirred and heated without concentration. This process has the advantage that a cellulose solution having a high solid content can be produced within a short period of time without concentration. However, since the liquid phase of the amine oxide may swell the cellulose concurrently with the dissolution of the cellulose, it may be likely to form a coating on the surface of pulp which is not yet dissolved. This makes a deep penetration of the amine oxide into the pulp impossible. Thus, this process has the drawback that, even with vigorous stirring or heating of the solution, a homogeneous solution cannot be formed due to the presence of undissolved cellulose.

European Patent No. 356,419 to Stefan *et al*. suggests a continuous process for making a large amount of cellulose solution within a short period of time by means of the same concentration steps as those of the above processes. According to this process, the cellulose slurry having a weight average polymerization degree (DP_{w}) of 1,400, which is obtained by swelling the cellulose solution in a tertiary amine oxide containing 40% by weight of water, is transferred to an extruder fitted with a screw having a fan type screw path, and distilled under reduced pressure with the retention time of 3 minutes in the extruder to form a cellulose solution at the rate of 72 kg per hour. In this process, the fan type screw is used for transferring the slurry concurrently with its concentration. This process has the problem of high production cost due to the energy for operating the screw.

The various processes for producing a cellulose solution in a tertiary amine oxide suggested in the prior art patents as mentioned above may be categorized into two groups as follows:

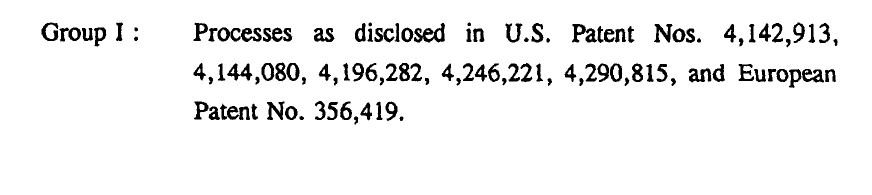

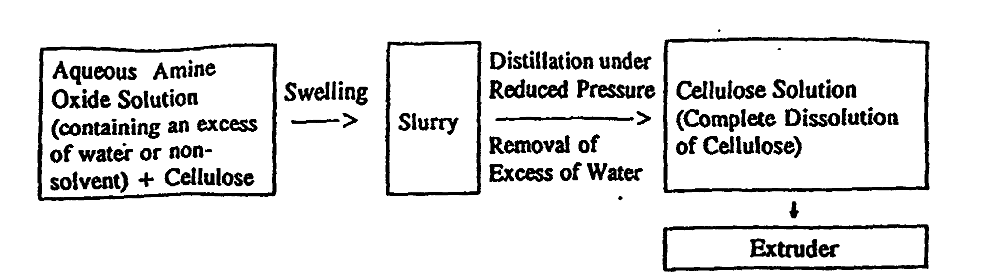

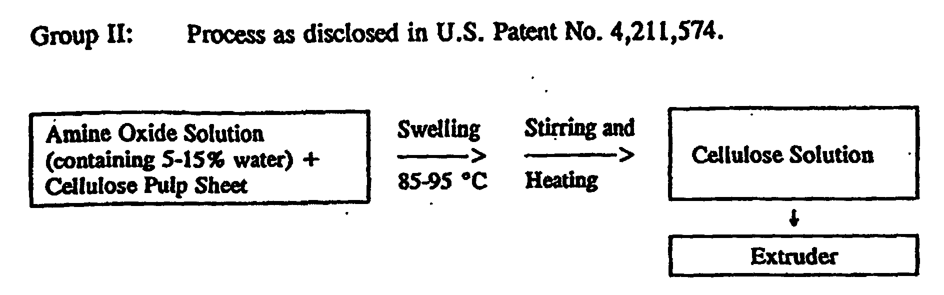

The cellulose solutions obtained from the above processes are highly viscous and in a phase where the cellulose has been dissolved. Solidification of the solution takes several hours to several days. Thus, it is very difficult to convert the cellulose solution into chips. Moreover, even if the solution is converted into chips, decomposition of the cellulose and discoloration of the solution may occur during the additional dissolution steps which are carried out in an extruder to spin the solution. In order to avoid these drawbacks, thus, the solution must be transferred directly into an extruder in a liquid phase without any chipping steps. Otherwise it takes a long period of time to make chips.

USSR Inventor's Certificate SU 1645308 A1 describes a method for obtaining hydrated cellulose fibres and films by mixing cellulose with solid tertiary amine oxide to produce a homogeneous mixture of particles, in a powder. This powder is subsequently heated above its melting point to produce a dope solution for extrudion.

As mentioned above, the inventors have extensively investigated the foregoing conventional processes for producing a cellulose solution in order to provide a practical process capable of forming a cellulosic article. As a result, the inventors have discovered that the above problems can be substantially eliminated by milling and blending cellulose with a solid tertiary amine oxide powder having a specific content of water, followed by heating to melt the tertiary amine oxide powder. The milling, blending and heating provide pelletized pre-dope granules, wherein the tertiary amine oxide is homogeneously dispersed throughout the cellulose, and are followed by heating the pre-dope granules, preferably in the barrel of an extruder, to dissolve the cellulose, extruding the resulting dope solution to provide an extrudate adapted to be spun, and spinning the extrudate through a spinnerette or die. The present invention has been completely based on this discovery.

The present invention provides granules comprising cellulose, the cellulose having a tertiary amine oxide powder dispersed therein and sintered therewith, the tertiary amine oxide powder having a water content of 5 to 17 % by weight.

The present invention also provides a process for producing pelletized pre-dope granules of cellulose and tertiary amine oxide powder, and pelletized pre-dope granules produced by the process.

The invention further provides a dope solution of cellulose adapted for spinning after the granules are transferred to an extruder without any chipping steps. The solution can be formed by heating the granules, preferably in an extruder, at a temperature sufficient to produce the solution.

The invention also provides a process for making shaped cellulosic articles such as fibers and films from a dope solution of cellulose.

In accordance with the invention, a process for producing pelletized pre-dope granules of cellulose and a tertiary amine oxide uniformly dispersed throughout therein comprises the steps of feeding cellulose to a mill preferably equipped with knife-edged blades, together with a tertiary amine oxide powder having a water content of 5 to 17 % by weight; and of milling and blending the solid mixture in the mill. The solid mixture is milled at a temperature comprised between 40°C and 100°C to agglomerate and sinter both the cellulose and the tertiary amine oxide powder completely without dissolving the cellulose. The temperature is thus below the melting temperature of the tertiary amine oxide powder so as to be in inter-diffusion without cellulose dissolution. The pre-dope granules are a solid complex of the cellulose which has not dissolved in the amine oxide.

The present invention will be further described by the accompanying drawings, wherein:
Fig. 1 is a block schematic diagram showing the procedure of a process for producing a solution of cellulose according to the present invention;
Fig. 2 shows the structure of a mill equipped with knife-edged blades for milling cellulose with tertiary amine oxide powder; and
Fig. 3(A) is a microscopic photograph of a pre-dope granule of cellulose and a tertiary amine oxide, and
Fig. 3(B) is a microscopic photograph of a dope solution of cellulose which is produced by passing the pelletized pre-dope granule through an extruder.

According to one aspect of the invention, a process for making pelletized pre-dope granules of cellulose and a tertiary amine oxide dispersed throughout therein is provided. The process according to the invention comprises the steps of:
(a) feeding cellulose to a mill, together with the tertiary amine oxide powder having a water content from 5 to 17% by weight; and
(b) milling and blending the resulting solid mixture in the mill, while keeping the mixture at a temperature comprised between 40 - 100°C to agglomerate and sinter the tertiary amine oxide powder and cellulose completely without dissolving the cellulose.

In the process of the present invention, the tertiary amine oxide powder having a specific water content is homogeneously dispersed throughout the cellulose by mixing these components in a mill. This is accomplished by using tertiary amine oxide powder having a water content of 5 to 17% by weight and heating the amine oxide powder at a temperature comprised between 40-100°C to agglomerate and sinter the powder and the cellulose completely without dissolving the cellulose.

The pelletized pre-dope granules thus obtained are stored such that they do not come in contact with moisture until they are shaped into a cellulosic article such as a fiber or a film. When needed, the pelletized pre-dope granules may be fed to an extruder to form a dope solution of cellulose for spinning.

Preferably, the tertiary amine oxide powders used in carrying out the invention may be N-methylmorpholine-N-oxide, N-methylpyrrolidine-N-oxide, N-methylpiperidine-N-oxide, N,N-dimethylethanolamine-N-oxide, N,N-dimethylbenzylamine-N-oxide, N,N-dimethylcyclohexylamine-N-oxide or mixtures thereof. Generally, the amount of cellulose to be fed to the mill is below 45% by weight, preferably 6 to 45% by weight, based on the total weight of a mixture of the cellulose and the tertiary amine oxide.

The temperature is controlled by adjusting friction heat and cooling water. Milling time should also be controlled to achieve the desired results as explained herein. The preferred temperature range in the mill depends on the cellulose content. The blending may be carried out at any revolution speed of the knife-edged blades of the mill, provided that the tertiary amine oxide is homogeneously dispersed throughout the cellulose to give the pre-dope granules. Blending at 500 to 10,000 rpm has produced the desired results.

Since the tertiary amine oxide has been dispersed through the fibrils of the cellulose in the pre-dope granules according to the invention, the pre-dope granules can form a dope solution of cellulose for spinning through complete dissolution of the cellulose within a short time period during their passing through an extruder equipped with a conventional exhaust vent. In accordance with the conventional processes, either a solution of cellulose or solid chips of the solution wherein cellulose is completely dissolved in an amine oxide is transferred directly to an extruder. By contrast, according to the present process (as is described with reference to the accompanying drawings hereinafter), the pelletized pre-dope granules consisting of cellulose and an amine oxide, wherein the amine oxide and cellulose have been sintered, may be transferred directly from a mill at a predetermined temperature to an extruder. Thus, the process of the present invention is quite different from the conventional processes.

The process of the present invention has the following important advantages:

First, the mechanical properties of fibers and films are improved by minimizing the time for dissolving a large amount of cellulose into a tertiary amine oxide to prevent the decomposition of both the cellulose and the tertiary amine oxide and the discoloration of the resulting solution. The dope solution of cellulose produced by the process of the invention is not discoloured by thermal decomposition to any great extent compared to the discoloration results from the conventional processes. Further, the molecular weight of the cellulose in the solution is maintained without substantial change. As a result, there is no need to use an antioxidant such as propyl gallate in order to maintain the molecular weight of the cellulose.

Second, since the pre-dope granules may be transferred directly into an extruder, there is no need to prepare solid chips. The pre-dope granules can also be used in conventional extruders.

Finally, a dope solution of cellulose with a high solid content can be easily obtained. Preparation of a cellulose solution having a high solid content by the conventional processes requires severe conditions, such as a high temperature, an extended time period or vigorous stirring, which degrade the cellulose. However, according to the present invention, the use of milling in a solid/solid phase does not require such severe conditions. Also, in the process of the present invention, even if the cellulose content is high (up to 45% by weight), the pre-dope granules are completely liquified within a short time period during their passing through an extruder.

The invention will be described in greater detail, by way of example only, with reference to the accompanying drawings.

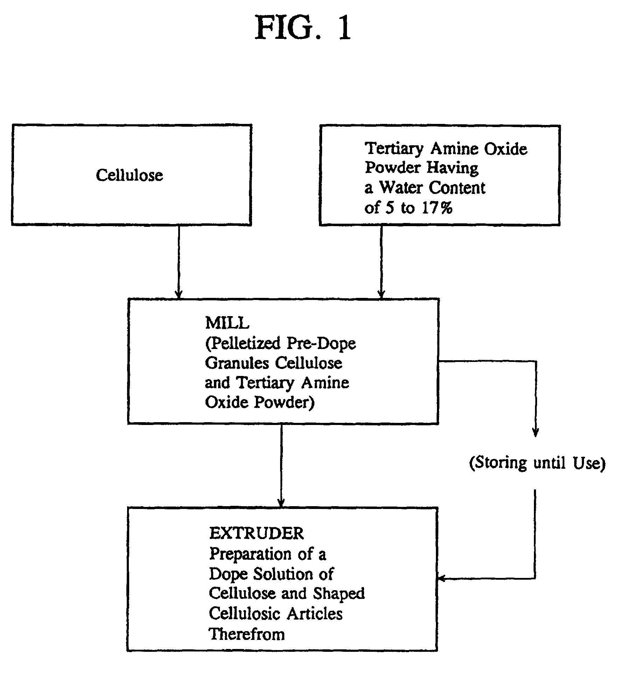

Fig. 1 is a diagrammatic illustration of a process for producing pelletized pre-dope granules of cellulose and a tertiary amine oxide powder. According to this process, the cellulose is fed to a mill, together with the tertiary amine oxide powder having a water content of 5 to 17% by weight. The resulting solid mixture is milled and blended to form pre-dope granules. The pre-dope granules thus obtained are then melted in an extruder to form a dope solution of cellulose for spinning, and the resulting dope solution is extruded through a spinnerette or die.

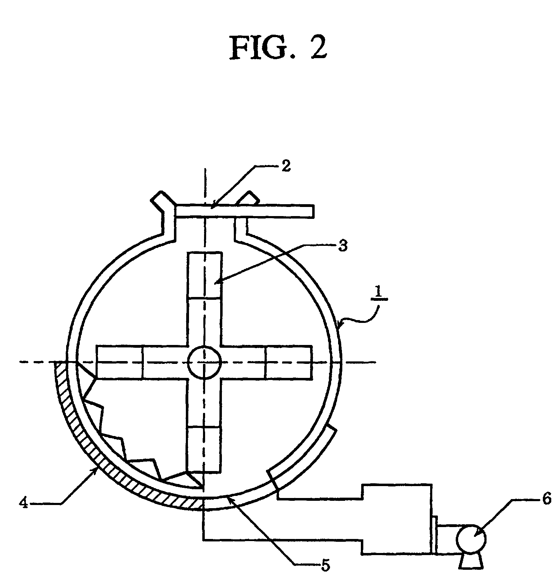

Fig. 2 shows schematically the process illustrated in Fig. 1 and the structure of an apparatus for carrying out the process. The cellulose is cut into a sheet in an equivalent size by means of a cutting machine, and introduced into the mill **1,** together with the tertiary amine oxide powder having a water content of 5 to 17% by weight, through an inlet **2**. The amount of the cellulose to be fed is up to 45% by weight, preferably from 6 to 45% by weight. The resulting solid mixture is homogeneously milled by means of a knife-edged blades **3** at 500 to 10,000 rpm. At this time, the temperature adjuster **4** installed on the outward wall of the mill **1** is maintained at 40 to 100 °C.

During the steps of milling and blending, the tertiary amine oxide powder is homogeneously dispersed throughout the cellulose. Also, since the tertiary amine oxide powder is sintered to penetrate into the undissolved cellulose fibrils, homogeneous solid complex granules, i.e. pelletized pre-dope granules can be obtained.

The pre-dope granules are removed from the mill **1** by an inhalator **6** through an inhalation inlet **5**. The resulting pre-dope granules are stored with a wrapping so as not to come in contact with moisture. Alternatively, a cellulose solution for spinning can be continuously prepared by connecting the mill **1** as illustrated in Fig. 2 directly to a hopper of an extruder.

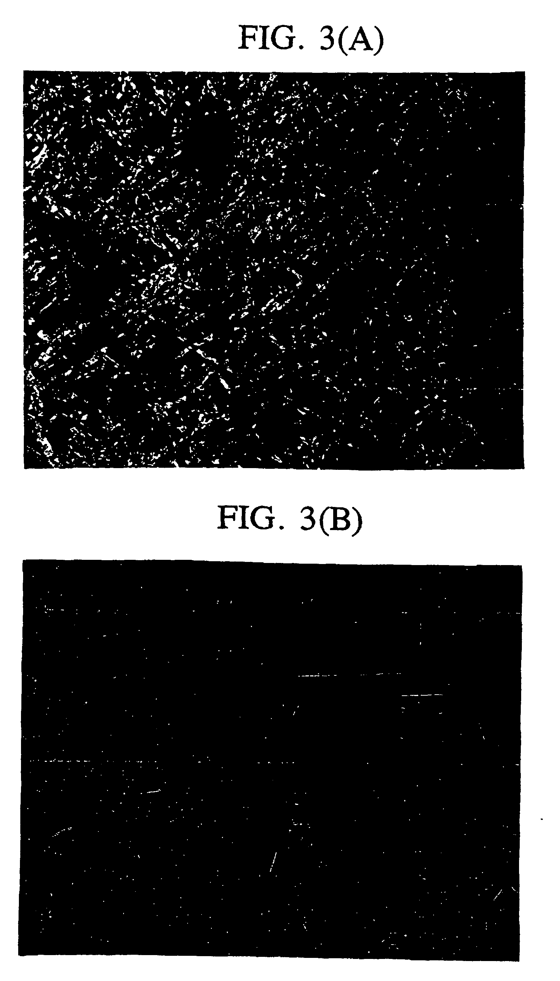

Fig. 3 (A) is a photomicrograph of the pre-dope granules produced in the mill **1**, as obtained through a microscope where a polarimeter is installed. Fig. 3 (B) is a photomicrograph of a dope solution of cellulose produced by passing the pelletized pre-dope granules through an extruder at a predetermined temperature.

When the pre-dope granules are observed with a microscope equipped with a polarimeter, the cellulose fibrils are found undissolved. However, because the tertiary amine oxide powder is homogeneously dispersed throughout the cellulose fibrils, particles of tertiary amine N-oxide are not observed in the pre-dope granules. In order to melt the pre-dope granules, they are passed through a single screw extruder equipped with an exhaust vent, which has a diameter of 25 mm and an L/D ratio of 20. The dope solution thus obtained can be observed through a microscope to determine whether the pre-dope granules have been completely melted or not.

The present invention will be described in greater detail by way of the following examples, which are not limiting as to the invention.

### EXAMPLE 1

85% by weight of N-methylmorpholine-N-oxide (NMMO) granules containing 12.5% by weight of water were introduced into a mill as shown in Fig. 2, and 15% by weight of cellulose pulp sheets (Rayonex-P: trade mark) having a size of 5 cm x 5 cm and a weight average polymerization degree (DP_{w}) of 900 were added thereto. The inner wall of the mill was maintained at 50 °C by means of the temperature adjuster **4**, and then resulting mixture was blended at 2500 rpm at that same temperature to form pelletized pre-dope granules.

The resulting pre-dope granules were introduced into a single screw extruder equipped with an exhaust vent, having a diameter of 25 mm and an L/D ratio of 20. After adjusting the temperature of the die region of the extruder to 90 °C, dope solutions were prepared under the processing conditions as shown in Table 1 below. A portion of the resulting solution was investigated for the melting of the cellulose and the degree of discoloration of the resulting solution by microscope. At that time, the temperatures of the solid phase moving region, the dissolution region, and the liquid phase moving region in the extruder were set to 50 °C, 90 °C, and 100 °C, respectively. The degree of dissolution is shown in Table 1 below.

The pre-dope granules not passed through the extruder were observed in the same manner as described above. The results confirmed that the cellulose remained undissolved in the mixture and that the amine oxide particles were not observed because they had been penetrated into the cellulose. In addition, it was observed that the pre-dope granules passed through the extruder were in a liquid phase wherein the cellulose had been completely dissolved.

The dope solution thus obtained was soaked in water to remove the solvent completely. About 3 g of the residue was dried in a vacuum drier for an hour, and then the molecular weight of the cellulose was calculated by measuring its inherent viscosity using a 0.5 M cuene solution. It was found that the molecular weight had been reduced less than in a conventional solution.

**Table 1**

| Revolution of extruder (rpm) | Resident time of pre-dope granules (sec) | Amount of solution to be extruded (g/hr) | DP_{w} of precipitated cellulose | Solution | |
|---|---|---|---|---|---|
| | | | | Cellulose fibril | Color |
| 5 | 567 | 590 | 650 | not observed | clear, pale brown |
| 10 | 255 | 914 | 655 | not observed | clear, pale brown |
| 20 | 123 | 1495 | 719 | not observed | clear, pale brown |
| 30 | 76 | 2060 | 820 | not observed | clear, pale brown |
| 50 | 53 | 3000 | 870 | not observed | clear, pale brown |

### EXAMPLE 2

This example was carried out under the same conditions as described in Example 1 to give a dope solution of cellulose, except that the temperatures of the die, the solid phase moving region, the dissolution region, and a liquid phase moving region of in the extruder were changed to 110 °C, 50 °C, 110 °C, and 110 °C, respectively.

The resulting dope solution was extruded into a coagulant (distilled water) at 0.6 g/minute through an extruder equipped with a metering pump and a spinnerette (aperture size of 0.5 mm, L/D=2, 1 hole). The fibers thus formed were wound at 100 m/minute and 200 m/minute, respectively. The fibers thus coagulated were washed with water, dried, and then their mechanical properties were checked. The results are shown in Table 2 below.

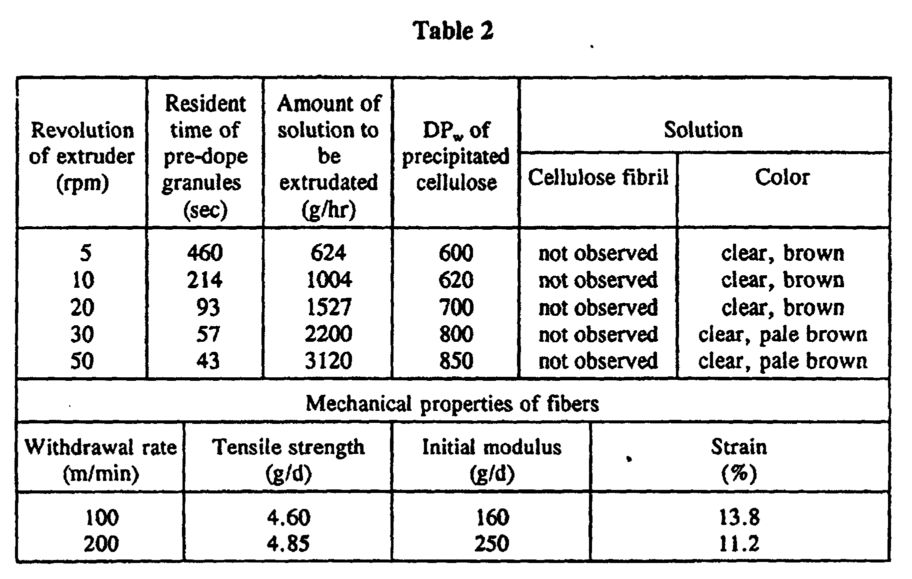

As can be seen from Table 2, no cellulose fibrils were observed in the solution under the processing conditions. However, the color of the solution was gradually changed into brown due to the decomposition of the solution with an increase in the temperature and the resident time of the pre-dope granules in the extruder.

### EXAMPLE 3

75% by weight of N-methylmorpholine-N-oxide powder containing 10% by weight of water were introduced into the mill **1** as shown in Fig, 2. 25% by weight of cellulose pulp sheets (Cellunier F) was added thereto. The inner wall of the mill was maintained at 60 °C by means of the temperature adjuster **4**, and the mixture was blended at 4,000 rpm at that temperature to form pelletized pre-dope granules. The resulting granules were treated under that conditions as described in Example 2 to produce a dope solution of cellulose. No cellulose fibrils were observed in the solution.

The dope solution thus obtained was extruded into a coagulant (containing about 20% by weight of N-methylmorpholine-N-oxide) in water at 0.2 g/minute through an extruder fitted with a metering pump and a spinnerette (an aperture size of 0.25 mm, L/D=5, 24 holes), by the same procedures as described in Example 2. The fibers thus formed were wound at 100 m/minute. The coagulated fibers were washed with water, dried, and the mechanical properties thereof were checked. The results are shown in Table 3 below.

**Table 3**

| Mechanical properties of fibers | | | |
|---|---|---|---|
| Cellulose | Tensile strength (g/d) | Initial modulus (g/d) | Strain (%) |
| Cellunier F | 3.80 | 200 | 7.5 |
| Baker #1528.1 | 3.5 | 180 | 8 |

### EXAMPLE 4

Into the mill **1** as shown in Fig. 2, 80% by weight of N-methylmorpholine-N-oxide powders containing 10% by weight of water were introduced, and 20% by weight of Cotton Pulp (DP 600) was added thereto. The inner wall of the mill was maintained at 60 °C, and the mixture was blended at 4,000 rpm at that temperature to form pelletized pre-dope granules. The resulting granules were treated under the same conditions as described in Example 2 to give a dope solution of cellulose, except that the temperature of the die region in the extruder was changed to 120 °C. No cellulose fibrils were observed in the solution.

The dope solution thus obtained was extruded into a coagulant (containing about 20% by weight of N-methylmorpholine-N-oxide) in water at 0.15 g/minute through an extruder fitted with a metering pump and a spinnerette (aperture size of 0.25 mm, L/D=3, 24 holes), by the same process as described in Example 2. The fibers thus obtained wound at 100 m/minute. The coagulated fibers were washed with water, dried, and the mechanical properties thereof were checked. The results are shown in Table 4 below.

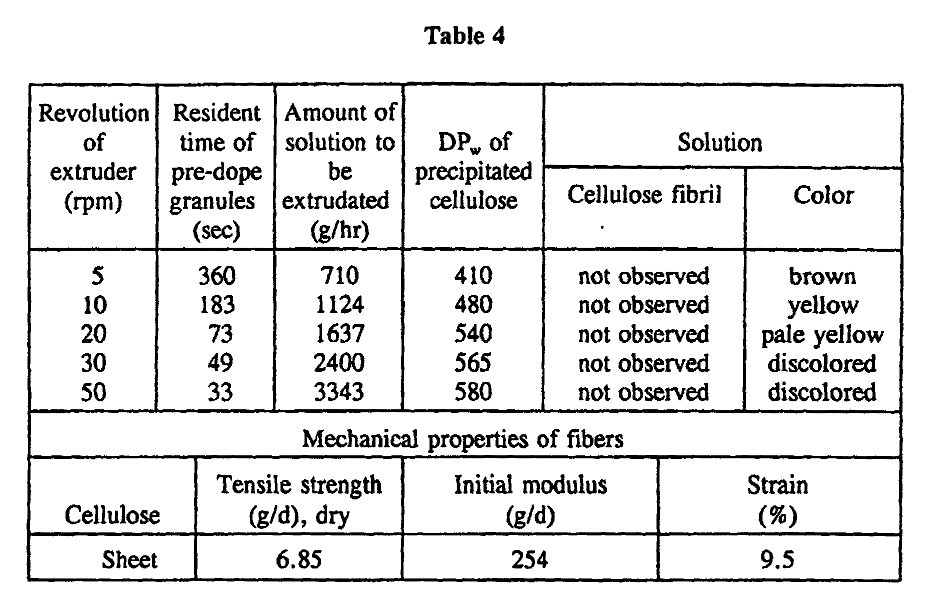

### EXAMPLE 5

65% by weight of N-methylmorpholine-N-oxide powders containing 6% by weight of water were introduced into the mill **1** as shown in Fig. 2. 35% by weight of cellulose pulp sheets (DP 200) was added thereto. The inner wall of the mill was maintained to 80 °C, and the mixture was blended at 5,000 rpm at that temperature to form pelletized pre-dope granules. The resulting granules were treated under the same conditions as described in Example 1 to give a dope solution of cellulose.

A small quantity of the cellulose fibrils were observed in the cellulose solution after passing through the extruder at 30 rpm and 50 rpm, respectively. However, the fibrils were easily removed with a filter.

### EXAMPLE 6

N-methylmorpholine-N-oxide powder containing 9% by weight of water, N,N-dimethylethanolamine-N-oxide powder containing 8% by weight of water, and the other tertiary amine oxide powders listed in Table 5 below containing 7% by weight of water were, respectively, introduced into the mill **1** maintained at 60 °C together with 10% by weight of cellulose pulp sheets (Cellunier Q) to form pelletized pre-dope granules. The resulting pelletized pre-dope granules were treated under that conditions as described in Example 1, except that the temperature of the die in the extruder and the revolution speed of screw were changed to 100 °C and 20 rpm.

No cellulose fibrils were observed in the cellulose solution after passing through the extruder. The results are shown in Table 5 below.

**Table 5**

| Tertiary amine oxide | Resident time of pre-dope granules (sec) | Amount of solution to be extrudated (g/hr) | DP_{w} of precipitated cellulose | Solution | |
|---|---|---|---|---|---|
| | | | | Cellulose fibril | Color |
| N,N-dimethylcyclohexylamine-N-oxide | 107 | 1540 | 750 | not observed | clear, pale brown |
| N,N-dimethylethanolamine-N-oxide | 104 | 1610 | 620 | not observed | clear, pale, brown |
| N-methylpyrrolidine-N-oxide | 111 | 1480 | 720 | not observed | clear, pale brown |
| N,N-dimethylbenzylamine-N-oxide | 112 | 1430 | 714 | not observed | clear, pale brown |
| N-methylpiperidine-N-oxide | 106 | 1570 | 750 | not observed | clear, pale brown |

## Claims

1. Pelletized pre-dope granules comprising cellulose and tertiary amine oxide, formed through simultaneous milling and blending of cellulose and tertiary amine oxide powder having a water content of 5 to 17% by weight, the milling and blending being carried out at a temperature comprised between 40° and 100°C to agglomerate the cellulose and the tertiary amine powder completely without dissolving the cellulose.

2. Pelletized pre-dope granules as claimed in claim 1, wherein the tertiary amine oxide is selected from the group consisting of N-methylmorpholine-N-oxide, N-methylpyrrolidine-N-oxide, N-methylpiperidine-N-oxide, N,N-dimethylbenzylamine-N-oxide, N,N-dimethylethanolamine-N-oxide, N,N-dimethylcyclohexylamine-N-oxide, and mixtures thereof.

3. Pelletized pre-dope granules as claimed in claim 1 or claim 2, wherein the proportion of cellulose is 6 to 45% by weight based on the total weight of the cellulose and tertiary amine oxide.

4. A process for making pelletized pre-dope granules comprising cellulose having tertiary amine oxide sintered throughout therein, which comprises the steps of:
(a) feeding cellulose to a mill, together with tertiary amine oxide powder having a water content of 5 to 17% by weight; and
(b) milling and blending the resulting solid mixture in the mill, while keeping the solid mixture at a temperature comprised between 40 and 100°C to agglomerate and sinter the cellulose and the tertiary amine oxide powder completely without dissolving the cellulose.

5. A process as claimed in claim 4, wherein the tertiary amine oxide powder is selected from the group consisting of N-methylmorpholine-N-oxide, N-methylpyrrolidine-N-oxide, N-methylpiperidine-N-oxide, N,N-dimethylbenzylamine-N-oxide, N,N-dimethylethanolamine-N-oxide, N,N-dimethylcyclohexylamine-N-oxide, and mixtures thereof.

6. A process as claimed in claim 4 or claim 5, wherein the cellulose is used in an amount of 6 to 45% by weight based on the total weight of the cellulose and tertiary amine oxide powder.

7. A process as claimed in any one of claims 4 to 6, wherein the mill is equipped with knife-edged blades.

8. A process for making shaped articles, by extruding a dope solution prepared from cellulose and tertiary amine oxide, **characterised in that** the dope solution is produced by heating pelletized pre-dope granules as claimed in any one of claims 1 to 3, or produced by a process as claimed in any one of claims 4 to 7 at a temperature sufficient to melt the tertiary amine oxide and dissolve the cellulose.

## Patentansprüche

1. Pelletierte Granulate, umfassend Cellulose und ein tertiäres Aminoxid, gebildet durch gleichzeitiges Mahlen und Mischen der Cellulose und des Pulvers aus tertiärem Aminoxid mit einem Wassergehalt von 5 bis 17 Gew.%, wobei das Mahlen und das Mischen bei einer Temperatur von 40 bis 100°C durchgeführt werden, um die Cellulose und das Pulver aus tertiärem Aminoxid vollständig zu agglomerieren, ohne die Cellulose aufzulösen.

2. Pelletierte Granulate nach Anspruch 1, wobei das tertiäre Aminoxid aus der Gruppe bestehend aus N-Methylmorpholin-N-oxid, N-Methylpyrrolidin-N-oxid, N-Methylpiperidin-N-oxid, N,N-Dimethylbenzylamin-N-oxid, N,N-Dimethylethanolamin-N-oxid, N,N-Dimethylcyclohexylamin-N-oxid und Gemischen davon ausgewählt ist.

3. Pelletierte Granulate nach Anspruch 1 oder 2, wobei der Anteil an Cellulose 6 bis 45 Gew.% basierend auf dem Gesamtgewicht der Cellulose und dem tertiärem Aminoxid beträgt.

4. Verfahren zur Herstellung pelletierter Granulate umfassend Cellulose mit darin durch und durch eingesintertem tertiärem Aminoxid, welches die Schritte umfaßt:
(a) Einspeisen der Cellulose zusammen mit dem Pulver aus tertiärem Aminoxid mit einem Wassergehalt von 5 bis 17 Gew.% in eine Mühle; und
(b) Mahlen und Mischen des resultierenden Festkörpergemisches in der Mühle, während das Festkörpergemisch bei einer Temperatur zwischen 40 und 100°C gehalten wird, um die Cellulose und das Pulver aus tertiärem Aminoxid vollständig zu agglomerieren und zu sintern, ohne die Cellulose aufzulösen.

5. Verfahren nach Anspruch 4, wobei das Pulver aus tertiärem Aminoxid aus der Gruppe bestehend aus N-Methylmorpholin-N-oxid, N-Methylpyrrolidin-N-oxid, N-Methylpiperidin-N-oxid, N,N-Dimethylbenzylamin-N-oxid, N,N-Dimethylethanolamin-N-oxid, N,N-Dimethylcyclohexylamin-N-oxid und Gemischen hiervon ausgewählt ist.

6. Verfahren nach Anspruch 4 oder 5, wobei die Cellulose in einer Menge von 6 bis 45 Gew.%, basierend auf dem Gesamtgewicht der Cellulose und des Pulvers aus tertiärem Aminoxid, verwendet wird.

7. Verfahren nach einem der Ansprüche 4 bis 6, wobei die Mühle mit Schneidmessern ausgestattet ist.

8. Verfahren zur Herstellung von Formkörpem durch Extrudierung einer Lösung hergestellt aus Cellulose und einem tertiärem Aminoxid, **dadurch gekennzeichnet, daß** die Lösung durch Erhitzen pelletierter Granulate nach einem der Ansprüche 1 bis 3 oder durch ein Verfahren nach einem der Ansprüche 4 bis 7 bei einer Temperatur, die ausreicht, um das tertiäre Aminoxid zu schmelzen und die Cellulose aufzulösen, hergestellt worden ist.

## Revendications

1. Granules de pré-enrobage pastillés comprenant de la cellulose et de l'oxyde d'amine tertiaire formés par broyage et mélange simultané de cellulose et de poudre d'oxyde d'amine tertiaire ayant une teneur en eau de 5 à 17% en poids, le broyage et le mélange étant effectués à une température comprise entre 40°C et 100°C pour agglomérer complètement la cellulose et la poudre d'oxyde d'amine tertiaire sans dissoudre la cellulose.

2. Granules de pré-enrobage pastillés selon la revendication 1, où l'oxyde d'amine tertiaire est choisi dans le groupe constitué par le N-oxyde-N-méthylmorpholine, le N-oxyde-N-méthylpyrrolidine, le N-oxyde-N-méthylpipéridine, le N-oxyde-N,N-diméthylbenzylamine, le N-oxyde-N,N-diméthyléthanolamine, le N-oxyde-N,N-diméthylcyclohexylamine, et leurs mélanges.

3. Granules de pré-enrobage pastillés selon la revendication 1 ou 2, où la proportion de cellulose est de 6 à 45% en poids par rapport au poids total de la cellulose et de l'oxyde d'amine tertiaire.

4. Procédé de préparation de granules de pré-enrobage pastillés comprenant de la cellulose pénétrée d'un bout à l'autre par de l'oxyde d'amine tertiaire fritté, qui comprend les étapes suivantes de :
(a) alimentation de la cellulose dans un broyeur, conjointement avec de la poudre d'oxyde d'amine tertiaire ayant une teneur en eau de 5 à 17% en poids ; et
(b) broyage et mélange du mélange solide résultant dans le broyeur tout en maintenant le mélange solide à une température comprise entre 40 et 100°C pour agglomérer et fritter complètement la cellulose et la poudre d'oxyde d'amine tertiaire sans dissoudre la cellulose.

5. Procédé selon la revendication 4, dans lequel l'oxyde d'amine tertiaire est choisi dans le groupe constitué par le N-oxyde-N-méthylmorpholine, le N-oxyde-N-méthylpyrrolidine, le N-oxyde-N-méthylpipéridine, le N-oxyde-N,N-diméthylbenzylamine, le N-oxyde-N,N-diméthyléthanolamine, le N-oxyde-N,N-diméthylcyclohexylamine, et leurs mélanges.

6. Procédé selon la revendication 4 ou 5, dans lequel la cellulose est utilisée dans une quantité de 6 à 45% en poids par rapport au poids total de la cellulose et de l'oxyde d'amine tertiaire.

7. Procédé selon l'une quelconque des revendications 4 à 6, dans lequel le broyeur est équipé de pales tranchantes.

8. Procédé de fabrication d'articles mis en forme par extrusion d'une solution d'enrobage préparée à partir de cellulose et d'oxyde d'amine tertiaire, **caractérisé en ce que** la solution d'enrobage est produite par chauffage de granules de pré-enrobage pastillés selon l'une quelconque des revendications 1 à 3, ou produite par un procédé selon l'une quelconque des revendications 4 à 7 à une température suffisante pour fondre l'oxyde d'amine tertiaire et dissoudre la cellulose.
